# EUROPÄISCHE PATENTSCHRIFT

(11) **EP 2 782 728 B1**
(45) Veröffentlichungstag und Bekanntmachung des Hinweises auf die Patenterteilung: **17.10.2018**
(21) Anmeldenummer: 12790890.3
(22) Anmeldetag: 21.11.2012
(51) Int. Cl.: B28B 11/12, B24B 27/00, B28D 1/18, B24B 7/22, B28D 1/20, B23Q 9/00, B24B 7/18

(54) **VORRICHTUNG UND VERFAHREN ZUM BEARBEITEN EINES BETONTURMSEGMENTES EINER WINDENERGIEANLAGE**
APPARATUS AND METHOD FOR PROCESSING A CONCRETE TOWER SEGMENT OF A WIND TURBINE
DISPOSITIF ET PROCÉDÉ DE RECTIFICATION D'UN SEGMENT DE MÂT EN BÉTON D'UNE ÉOLIENNE

(30) Priorität: 24.11.2011 DE 102011087025; 17.10.2012 DE 102012020333
(43) Veröffentlichungstag der Anmeldung: 01.10.2014
(73) Patentinhaber: Wobben Properties GmbH, 26607 Aurich (DE)
(72) Erfinder: HORN, Günther, 26605 Aurich (DE); HÖLSCHER, Norbert, 26607 Aurich (DE); STRACKE, Olaf, 26725 Emden (DE)
(74) Vertreter: Eisenführ Speiser
(86) Internationale Anmeldenummer: PCT/EP2012/073274
(87) Internationale Veröffentlichungsnummer: WO 2013/076166

(56) Entgegenhaltungen:
- DE-A1- 10 108 139
- DE-A1-102008 016 828
- JP-U- 49 052 191
- US-A- 5 533 790
- Concrete Grinding Ltd: "Concrete Grinding", , 10. Juni 2011 (2011-06-10), Seiten 1-1, XP054975128, Gefunden im Internet: URL:http://www.youtube.com/watch?v=YZ4auji R7qU [gefunden am 2013-04-04]

## Beschreibung

Die vorliegende Erfindung betrifft eine Vorrichtung zum Bearbeiten eines oberen Segmentrandes eines Turmsegmentes eines Betonturms, insbesondere einer Windenergieanlage und ein entsprechendes Bearbeitungsmittel. Weiterhin betrifft die vorliegende Erfindung ein entsprechendes Verfahren.

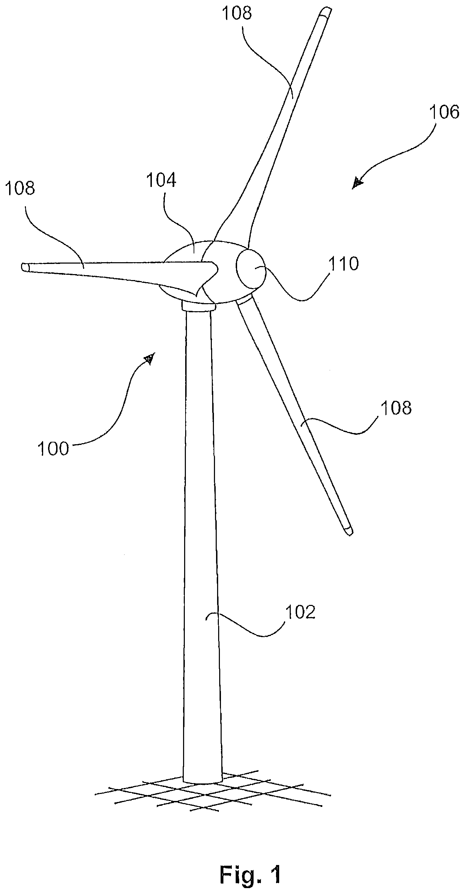

Moderne Windenergieanlagen, wie beispielsweise eine in Fig. 1 gezeigte, weisen einen Turm auf, auf dem eine Windenergieanlagengondel drehbar gelagert ist. Ein solcher Turm erreicht heutzutage Höhen von 130 m und in Zukunft ist mit noch höheren Türmen zu rechnen. Eine Bauweise für einen solchen Windenergieanlagenturm ist die Verwendung von Turmsegmenten als Betonfertigteil, die im Sinne eines Bausteinsystems aufeinandergesetzt werden, um dadurch ganz oder teilweise den Turm zu bilden.

Wird ein Turm somit aus vielen übereinandergesetzten Turmsegmenten aufgebaut, ist es essenziell, dass die Ebenen, auf denen Turmsegmente jeweils aufeinandergesetzt werden, planparallel zueinander verlaufen, damit der Turm gerade und senkrecht steht. Entsprechend sollte jedes Segment eine Ober- und eine Unterseite aufweisen, die planparallel zueinander angeordnet sind.

Aus der deutschen Offenlegungsschrift DE 10 2008 016 828 A1 ist dafür ein Verfahren zum Herstellen von Betonfertigteilen bekannt, bei dem eine Nachbearbeitung eines gegossenen Betonfertigteils nach dem Aushärten so erfolgt, dass auf eine einer Unterseite gegenüberliegenden Stoßfläche eine Ausgleichsschicht aufgebracht wird. Die Ausgleichsschicht kann beispielsweise ein Kunstharz oder Zement aufweisen. Das so vorbereitete Betonfertigteil wird dann auf einer horizontalen Ebene platziert und die Ausgleichsschicht zu dieser horizontalen Ebene planparallel abgetragen. Hierzu wird eine Vorrichtung ähnlich einer Portalfräsmaschine eingesetzt. Eine solche Fräsmaschine muss entsprechend präzise zu der horizontalen Ebene ausgerichtet sein und entsprechend genau arbeiten, um eine entsprechende Güte der zu erreichenden Planparallelität zu erreichen. Insgesamt ist dieses Verfahren recht aufwändig.

Die deutsche Offenlegungsschrift DE 10 2009 049 435 A1 offenbart ein verbessertes Verfahren zum Aufbringen einer Ausgleichsschicht auf einen oberen Rand eines Betonfertigteils. Hierbei wird auf die Schalung, in der das Fertigbetonteil gegossen wurde und im Wesentlichen ausgehärtet ist, ein Abdeckdeckel aufgesetzt, der oberhalb des Betonsegments einen ringförmigen Kanal schafft, in den eine Ausgleichsmasse niedriger Viskosität eingebracht wird.

Ein Nachteil des in DE 10 2009 049 435 A1 offenbarten Herstellungsverfahrens besteht darin, dass für jedes Schalungssegment eines Betonfertigteils ein Abdeckdeckel bereitgestellt werden muss.

Das US-amerikanische Patent US 5,533,790 A betrifft eine Bodenfräsmaschine zum Fahren auf einem Boden und zum Fräsen des Bodens. In dem YouTube Video "Concrete Grinding", XP054975128 (URL:http://www.youtube.com/watch?v=YZ4aujiR7qU) vom 10. Juni 2011 wird ein Arbeitsvorgang auf einem Boden gezeigt.

Der vorliegenden Erfindung liegt somit die Aufgabe zugrunde, wenigstens eines der oben genannten Probleme zu adressieren. Insbesondere soll somit ein Verfahren zum Erreichen der Planparallelität von Ober- und Unterseite eines Betonturmsegmentes verbessert, insbesondere bei gleichbleibend hoher Qualität vereinfacht werden. Zumindest soll eine alternative Lösung vorgeschlagen werden. Eine Aufgabe der Erfindung besteht darin, eine planparallele Fuge auf einem Fertigbetonteil herzustellen. Dieser Herstellungsprozess soll mit möglichst wenigen Produktionsmitteln umgesetzt werden.

Erfindungsgemäß wird eine Vorrichtung gemäß Anspruch 1 vorgeschlagen. Diese Vorrichtung wird zum Bearbeiten eines oberen Segmentrandes eines Turmsegmentes eines zu fertigenden Betonturms verwendet. Diese Bearbeitung erfolgt zum Vorbereiten des Turmsegments zum Aufsetzen wenigstens eines weiteren Turmsegments. Insbesondere hat die Bearbeitung zum Ziel, eine Planparallelität herzustellen, nämlich zwischen einer Ebene, in der der obere Segmentrand verläuft und einer Ebene, in der ein unterer Segmentrand ist plan und dabei zur Standfläche planparallel vorzusehen. Diese Aufgabe soll die Bearbeitungsvorrichtung zumindest teilweise übernehmen.

Weiterhin ist ein Bearbeitungsmittel zum Bearbeiten des Segmentrandes und eine im Bereich des Segmentrandes zu befestigende Tragvorrichtung zum verfahrbaren Tragen und Führen des Bearbeitungsmittels entlang des Segmentrandes vorgesehen. Das Bearbeitungsmittel führt somit zumindest einen Bearbeitungsschritt aus und bewegt sich dabei entlang des Segmentrandes. Im Grunde führt das Bearbeitungsmittel dabei eine insbesondere langsame kreis- oder teilkreisförmige Bewegung aus, was bspw. durch Verwendung eines Fahrwagens auf einem Schienensystem erreicht werden kann. Hierzu wird das Bearbeitungsmittel von der Tragvorrichtung getragen und geführt. Insbesondere wird das Bearbeitungsmittel hierbei im Wesentlichen oberhalb des oberen Segmentrandes getragen und entlang einer kreis- oder teilkreisförmigen Bahn geführt.

Vorzugsweise ist ein Messmittel vorgesehen zum Bestimmen der Position des Bearbeitungsmittels in Bezug auf eine zu einer Standfläche planparallelen Bearbeitungsebene. Demnach ist das Messmittel im Grunde zum Bestimmen einer horizontalen Position des Bearbeitungsmittels vorgesehen. Diese horizontale Position wird dabei auf die Standfläche oder eine andere dazu planparallele Bearbeitungsebene bezogen. Somit ist eine Positionsüberwachung des Bearbeitungsmittels relativ zur Bearbeitungsebene möglich. Hierdurch kann die Position, nämlich insbesondere die Höhe des Bearbeitungsmittels überwacht werden und gegebenenfalls auch regelungstechnisch eingegriffen werden.

Gemäß einer Ausführungsform wird vorgeschlagen, dass das Messmittel einen Positionsgeber zum Messen und Übertragen der Position des Bearbeitungsmittels und/oder zum Vorgeben einer virtuellen Messebene aufweist und dass wenigstens ein Ausrichtmittel zum Ausrichten des Positionsgebers in Bezug auf die Standfläche vorgesehen ist. Der Positionsgeber misst somit die Position des Bearbeitungsmittels in Bezug auf die Standfläche, nämlich im Grunde die genaue Höhe des Bearbeitungsmittels in Bezug auf die Standfläche. Der Positionsgeber misst somit insbesondere oder ausschließlich diese Höhe des Bearbeitungsmittels. Somit erfasst der Positionsgeber diese Position, insbesondere Höhe des Bearbeitungsmittels und überträgt diese Information an das Bearbeitungsmittel, das darauf reagieren kann, falls erforderlich. Alternativ oder zusätzlich überträgt der Positionsgeber ein Signal, das das Bearbeitungsmittel verwendet, um dadurch seine Position selbst zu bestimmen.

Hierfür ist von Bedeutung, dass die Position des Positionsgebers, nämlich insbesondere seine Position in Bezug auf die Standfläche sehr genau bekannt ist. Dazu gehört der genaue Abstand des Positionsgebers zur Standfläche als auch seine Ausrichtung in Bezug auf die Ebene der Standfläche. Der Positionsgeber wird dabei so ausgerichtet, dass er im Grunde eine virtuelle, zur Standfläche planparallele Ebenes zugrunde legt bzw. aufspannt, die auch als virtuelle Messebene bezeichnet werden kann. Die Position des Bearbeitungsmittels kann hierdurch auf diese virtuelle Messebene bezogen werden. Insbesondere verläuft das Bearbeitungsmittel bzw. ein Referenzpunkt des Bearbeitungsmittels optimalerweise in dieser virtuellen Messebene. Abweichungen von dieser virtuellen Messebene werden durch den Positionsgeber erfasst und an das Bearbeitungsmittel übertragen. Hierdurch kann die Position des Bearbeitungsmittels genau erfasst und gegebenenfalls berücksichtigt werden. Hierdurch können leichte Variationen in der Höhe, insbesondere bedingt durch Variationen der Tragvorrichtung in Bezug auf die Standfläche bzw. in Bezug auf die virtuelle Messebene berücksichtigt und optimaler weise ausgeglichen werden.

Für das Ausrichten des Positionsgebers selbst, nämlich in Bezug auf die Standfläche, wird die Verwendung wenigstens eines Ausrichtmittels vorgeschlagen. Das Ausrichtmittel befindet sich vorzugsweise ebenfalls zumindest in etwa in der virtuellen Messebene, um dadurch Höhe und Ausrichtung in Bezug auf die virtuelle Messebene vorzunehmen bzw. hierfür als Referenzobjekt für den Positionsgeber zur Verfügung zu stehen. Vorzugsweise werden vier Ausrichtmittel eingesetzt, die in etwa in der virtuellen Messebene angeordnet werden. Hierdurch stehen drei Ausrichtmittel zur Verfügung, um Ausrichtung und Höhe des Positionsgebers zu überprüfen bzw. den Positionsgeber bei seiner Ausrichtung als Referenzpunkt zu dienen. Bei Verwendung von vier Ausrichtmitteln stehen somit drei für die Ausrichtung zur Verfügung und ein viertes kann eine Redundanz erreichen.

Vorzugsweise ist das Messmittel als Lasermessmittel ausgebildet. Hierdurch wird insbesondere mittels Laser die virtuelle Messebene aufgespannt, die planparallel zur Standfläche ist. Basierend auf dieser virtuellen Messebene wird die Position des Bearbeitungsmittels hierzu bestimmt. So wird ein Laser von dem Positionsgeber an eine entsprechende Stelle des Bearbeitungsmittels projiziert und dadurch die Höhe des Bearbeitungsmittels, insbesondere der Referenzmarke relativ zu der Laserprojektion bestimmt und dadurch erfasst, insbesondere relativ zu einer Referenzmarke an dem Bearbeitungsmittel. Der Positionsgeber kann den Laser in der virtuellen Messebene der Bewegung des Bearbeitungsmittels nachführen.

Auf gleiche Art und Weise kann auch die Ausrichtung des Positionsgebers durchgeführt bzw. überprüft werden, indem nämlich der Positionsgeber außerdem jeweils einen Laser auf jedes der Ausrichtmittel projiziert und dort sich selbst so ausrichtet bzw. so ausgerichtet lässt, dass eine Projektion jeweils auf eine vorgegebene Positionsmarke jedes Ausrichtmittels projiziert wird. So kann der Positionsgeber und insbesondere auch jedes Ausrichtmittel in seiner Höhe relativ zur Standfläche fest installiert sein. Durch die Ausrichtmittel wird insbesondere eine Parallelität des Positionsgebers, wenigstens des zum Bearbeitungsmittel ausgesandten Lasers erreicht. Durch die Verwendung von drei Ausrichtmitteln ist somit eine Planparallelität überprüfbar bzw. ist der Positionsgeber entsprechend ausrichtbar.

Das Lasermessmittel kann auch so ausgebildet sein, dass der Positionsgeber einen Laser in einer Ebene, nämlich der virtuellen Messebene, auf das Bearbeitungsmittel projiziert und das Bearbeitungsmittel über einen Sensor verfügt, der die Position des aufprojizierten Lasers in der Höhe erkennt und dadurch die Position des Bearbeitungsmittels relativ zur Standfläche oder relativ zur virtuellen Messebene erfasst. Der hierfür auf das Bearbeitungsmittel projizierte Laser kann dem Bearbeitungsmittel bei seiner Bewegung entlang der Tragvorrichtung nachgeführt werden, oder es wird ein Laser kontinuierlich in sehr viele Richtungen kurzzeitig ausgesendet, um dadurch zu erreichen, dass regelmäßig ein Laser von dem Positionsgeber auch auf das Bearbeitungsmittel projiziert wird. Hierbei kann der gleiche kontinuierlich in unterschiedliche Richtungen in der virtuellen Messebene abgegebene Laser auch zu einer Positionserkennung an den Ausrichtmitteln führen. Unter dem Aussenden eines Lasers kontinuierlich in viele Richtungen wird insbesondere auch ein pulsartiges Aussenden in viele Richtungen, insbesondere nacheinander, verstanden. Der Laser wird insbesondere mittig aufgestellt und sendet in 360° aus. Ein kontinuierliches Aussenden in unterschiedliche Richtungen meint soweit nicht unbedingt, dass die Aussendung dauerhaft, als Dauerlaser erfolgen soll.

Gemäß einer weiteren Ausführungsform wird vorgeschlagen, dass die Tragvorrichtung als Schienensystem ausgebildet ist, insbesondere dass die Tragvorrichtung ein Schienenpaar aufweist. Günstig ist es, wenn das Schienensystem bzw. das Schienenpaar an einer Schalung zum Herstellen des Turmsegmentes befestigt ist, insbesondere dauerhaft fest befestigt ist. Eine solche Schalung benötigt üblicherweise eine Innen- und eine Außenschalung, um dazwischen eine entsprechende Wandung des Turmsegmentes aufzunehmen bzw. um dazwischen den einzugießenden Beton zum Herstellen dieser Wandung aufzunehmen. So ist es günstig, eine Schiene an der Innenschalung und eine Schiene an der Außenschalung fest zu installieren. Durch das Bereitstellen der Schalung wird somit automatisch auch die Tragvorrichtung bereitgestellt. Eine notwendige Genauigkeit beim Bearbeiten des Segmentrandes - nach dem Gießen und Aushärten des Turmsegments - kann mithilfe des Messmittels erreicht bzw. überwacht werden. Eine hohe Fertigungsgenauigkeit der Tragvorrichtung kann dadurch entbehrlich werden.

Gemäß einer weiteren Ausführungsform wird vorgeschlagen, dass das Bearbeitungsmittel als verfahrbares Mittel insbesondere Auftragsfahrzeug zum Auftragen einer Ausgleichsmasse insbesondere als Harz- oder Zementauftragsmittel ausgebildet ist und/oder dass das Bearbeitungsmittel oder ein weiteres Bearbeitungsmittel als materialabnehmende Vorrichtung, insbesondere als Fräsvorrichtung und/oder als Schleifvorrichtung ausgebildet ist. Eine Ausgleichsmasse ist zum Ausgleich etwaiger Höhenunterschiede vorgesehen und sie kann dafür als Harz, insbesondere Kunstharz oder als Zement ausgebildet sein. Bei nachfolgenden Bezugnahmen auf Harz betreffen diese grundsätzlich ebenso andere Ausgleichsmassen, insbesondere Zement, sofern nichts anderes erläutert ist. Das Bearbeitungsmittel ist somit entweder als Harz- oder Zementauftragsmittel oder als Material abnehmende Vorrichtung ausgebildet. Die Bearbeitungsvorrichtung kann auch mehrere Bearbeitungsmittel aufweisen, von denen eines als Harz- oder Zementauftragsmittel ausgebildet ist und das andere als materialabnehmende Vorrichtung.

Entsprechend ist vorgesehen, dass bei dieser Ausführungsform der Verwendung von zwei Bearbeitungsmitteln, beide insbesondere an das Schienensystem angepasst sind und beide - insbesondere nacheinander - auf diesem Schienensystem oder anders ausgebildeten Tragvorrichtung verfahren werden können. Auch das Zusammenspiel mit dem Messmittel kann für beide Bearbeitungsmittel vorgesehen sein. Möglicherweise ist aber für das Harz- oder Zementauftragsmittel eine geringere Genauigkeit erforderlich. Entsprechend ist ein Zusammenwirken des Harz- oder Zementauftragsmittels mit dem Messmittel gegebenenfalls nicht oder mit geringerer Genauigkeit vorgesehen. Insbesondere kann ein Auftrag eines Harzes oder Zements mit dem Harz- oder Zementauftragsmittel mit geringer Genauigkeit vorgesehen sein und ein Glätten, insbesondere Fräsen oder Schleifen mit dem materialabnehmenden Bearbeitungsmittel mit einer höheren Genauigkeit vorgesehen sein, wodurch Ungenauigkeiten des Auftrags wieder ausgeglichen werden. Dennoch ist auch eine möglichst genaue Auftragung wünschenswert, um möglichst wenig von der aufgetragenen Auftragsmasse zum Zwecke der Glättung bzw. Ausebnung abtragen zu müssen.

Eine so entstandene, aufgetragene und ausgeebnete Harzfläche, Zementfläche oder andere Ausgleichsfläche schafft für das Turmsegment eine zur Standfläche planparallele Oberfläche zum Aufsetzen eines weiteren Turmsegments.

Vorzugsweise weist das Bearbeitungsmittel einen in der Höhe beweglichen insbesondere abnehmbaren Arbeitskopf auf. Dieser Arbeitskopf kann dann entsprechend der jeweils erfassten Position des Bearbeitungsmittels jeweils so in der Höhe angepasst werden, dass sich zwar ein von der Tragvorrichtung geführter Körper des Bearbeitungsmittels in seiner vertikalen Position - bezogen auf die virtuelle Messebene bzw. die Standfläche - verändert, insbesondere ein Gehäuse oder Tragrahmen, der Arbeitskopf aber in dieser vertikalen Position konstant bleibt. Insbesondere können hierdurch Ungenauigkeiten der Tragvorrichtung, insbesondere eines entsprechenden Schienensystems, ausgeglichen werden. Dies ermöglicht das Vorsehen einer Tragvorrichtung mit geringerer Genauigkeit und damit auf deutlich kostengünstigere Weise.

Erfindungsgemäß ist die Tragvorrichtung an der Schalung befestigt.

Ergänzend oder alternativ weist das Bearbeitungsmittel eine Fahrvorrichtung auf zum Verfahren entlang der Tragvorrichtung, die insbesondere eine oder zwei Schienen aufweist und entsprechend zum Verfahren entlang des oberen Segmentrandes. Die Fahrvorrichtung ist dazu vorbereitet, ein Bearbeitungswerkzeug aufzunehmen. Das Bearbeitungswerkzeug kann ein Werkzeug zum Auftragen einer Ausgleichsmasse, insbesondere eines Harzes oder Zements ausgebildet sein. Ebenso kann das Bearbeitungswerkzeug als Material abnehmendes Werkzeug, insbesondere zum Fräsen oder Schleifen ausgebildet sein. Insbesondere wird vorgeschlagen, dass die Fahrvorrichtung dazu ausgebildet ist, je nach durchzuführendem Arbeitsschritt ein entsprechendes Bearbeitungswerkzeug aufzunehmen. Hierdurch kann bei unterschiedlichen Arbeitsschritten wie das Auftragen der Ausgleichsmasse und dem späteren Ebnen, nämlich Abtragen von Ausgleichsmasse, dieselbe Fahrvorrichtung verwendet werden, wobei lediglich das Bearbeitungswerkzeug zu tauschen ist.

Außerdem wird ein Bearbeitungsmittel vorgeschlagen, dass zum Bearbeiten bzw. Herstellen einer planen Oberfläche, insbesondere eines oberen Segmentrandes vorgesehen ist und außerdem oder alternativ zum Bearbeiten einer planen Oberfläche eines Bearbeitungstellers und/oder einer planen Oberfläche eines Betonfundamentes geeignet ist. All diese Bearbeitungsaufgaben dienen letztlich der Vorbereitung des Errichtens eines Betonturmes. Ein solches vorgeschlagenes Bearbeitungsmittel umfasst ein Bearbeitungswerkzeug, einen Tragrahmen und mehrere Verfahrmittel. Das Bearbeitungswerkzeug ist zum Bearbeiten der planen Oberfläche vorgesehen, was auch das Herstellen der planen Oberfläche beinhaltet. Das Bearbeitungswerkzeug ist insbesondere zum Planfresen einer solchen Oberfläche vorgesehen. Hierzu können entsprechende Bearbeitungsköpfe, also im genannten Beispiel entsprechende Fräsköpfe eingesetzt werden, die an das Material der zu bearbeitenden Oberfläche angepasst sind. Das Bearbeitungswerkzeug kann aber auch zum Auftragen einer Ausgleichsmasse oder anderen Materialschicht vorgesehen sein und es kann ggf. zum Nachbearbeiten einer solchen aufgetragenen Ausgleichsschicht, insbesondere nachdem diese ausgehärtet ist, vorgesehen sein.

Der Tragrahmen trägt das Bearbeitungswerkzeug und kann mittels der Verfahrmittel verfahren werden, um dadurch das Bearbeitungswerkzeug entlang der zu bearbeitenden Oberfläche zu verfahren. Die Verfahrmittel sind dabei zum Verfahren entlang der planen Oberfläche und/oder zum Verfahren entlang benachbart zur planen Oberfläche angeordneter Tragvorrichtungen vorbereitet. Die Verfahrmittel selbst sind somit im Bereich der zu bearbeitenden planen Oberfläche angeordnet und bewegen sich auch dort. Bspw. kann jedes Verfahrmittel ein Rad, eine Rolle oder ein Radsatz umfassen. Damit kann jedes Verfahrmittel entlang einer Schiene geführt werden, die im Wesentlichen der zu bearbeitenden, planen Oberfläche folgt. Insbesondere können hierfür eine kreisförmige oder zwei kreisförmige, konzentrisch zueinander angeordnete Schienen vorgesehen sein.

Mittels der Verfahrmittel wird der gesamte Tragrahmen verfahren und dadurch das Bearbeitungswerkzeug, dass von dem Tragrahmen getragen wird. Das Verfahren des Bearbeitungswerkzeugs erfolgt somit im Wesentlichen nicht durch ein Verfahren des Bearbeitungswerkzeugs relativ zum Tragrahmen, sondern zusammen mit dem Tragrahmen. Eine relative Bewegung des Bearbeitungswerkzeugs oder zumindest eines Bearbeitungskopfes davon, insbesondere auch in vertikaler Richtung, kann aber zusätzlich vorgesehen sein.

Vorzugsweise sind die Verfahrmittel zum Verfahren entlang einer Bahn eines Kreises vorbereitet. Somit erfolgt eine spezielle Anpassung an die Bedürfnisse zum Bearbeiten eines Segmentrandes eines Betonturmsegmentes, oder einer Standfläche eines solchen Betonturmsegmentes. Dabei werden plane Standflächen für ein Turmsegment sowohl auf einem Bearbeitungsteller zum Herstellen des Turmsegments benötigt, als auch auf einem Fundament, auf dem der Betonturm errichtet werden soll und auf dem ein unteres Turmsegment steht. Entgegen einer Lösung, wie sie bspw. aus dem Dokument DE 10 2008 016 828 A1 bekannt zu sein scheint, wird von dem Positionieren des Bearbeitungsmittels durch Vorgabe zweier kartesischer Koordinaten, sog. X-Y-Koordinaten, Abstand genommen und vielmehr im Grunde das gesamte Bearbeitungsmittel entlang der Bahn eines Kreises, also einer Kreisbahn bewegt.

Vorzugsweise überspannt der Tragrahmen den Kreis. Entsprechend sind wenigstens zwei Verfahrmittel an etwa gegenüberliegenden Positionen des Kreises angeordnet und über den Tragrahmen verbunden. Insbesondere können vier Verfahrmittel, nämlich jeweils zwei an zwei sich gegenüberliegenden Seiten angeordnet sein. Eine günstige Ausgestaltung schlägt hierbei vor, dass das Bearbeitungsmittel bestimmungsgemäß so arbeitet, das der Tragrahmen um eine Drehachse dreht, nämlich während die Verfahrmittel jeweils entlang der Kreisbahn verfahren. Dies ist vorteilhafterweise so gestaltet, dass die entsprechende Drehachse durch den Tragrahmen verläuft, der Tragrahmen sich also im Grunde um sich selbst dreht. Das Bearbeitungswerkzeug kann dadurch entlang einer Kreisbahn geführt werden, nämlich insbesondere wenn das Bearbeitungswerkzeug in dem Tragrahmen von der Drehachse beabstandet angeordnet ist. Die Kreisbahn, entlang der das Bearbeitungswerkzeug geführt wird, kann von der Kreisbahn, entlang derer die Verfahrmittel verfahren, abweichen. Vorzugsweise umgibt die Kreisbahn, auf der die Verfahrmittel fahren, die Kreisbahn, entlang der das Bearbeitungsfahrzeug geführt wird, in geringem Abstand.

In vorteilhafter Weise ist der Tragrahmen in der Länge verstellbar, um dadurch einen Abstand zwischen wenigstens zwei der Verfahrmittel zu verändern. Dadurch kann erreicht werden, dass die Verfahrmittel entlang unterschiedlich großer Kreise verfahren werden können und entsprechend auch das Bearbeitungswerkzeug entlang unterschiedlicher Kreisbahnen geführt werden kann. Das Bearbeitungsmittel wird hierdurch universell für unterschiedlich große Turmsegmente einsetzbar. Für die Herstellung von Turmsegmenten eines konisch zulaufenden Turmes, die somit mit der Höhe im Durchmesser variieren, kann ein einziges Bearbeitungsmittel ausreichend sein, dass sich durch die Längenveränderung des Tragrahmens an die entsprechenden Größen anpasst.

Vorzugsweise umfasst das Bearbeitungsmittel einen Messsensor, der an einen Positionsgeber angepasst ist. Ein solcher Positionsgeber gibt eine exakte Position, insbesondere vertikale Position vor, und spannt dadurch virtuell eine exakte Ebene auf, an die die zu bearbeitende Oberfläche anzupassen ist. Insbesondere ist hierdurch eine Planparallelität der herzustellenden bzw. zu bearbeitenden planen Oberfläche des jeweiligen Turmsegmentes in Bezug auf die Standfläche desselben Turmsegmentes zu erreichen. Für die Bearbeitung einer planen Oberfläche des Fundamentes ist insbesondere eine möglichst waagerechte Oberfläche zu schaffen, um eine möglichst exakte, senkrechte Aufstellung des zu errichtenden Betonturmes zu gewährleisten.

Der Messsensor ist an einen solchen Positionsgeber angepasst und somit kann das Bearbeitungswerkzeug entlang der herzustellenden bzw. zu bearbeitenden, durch den Positionsgeber festgelegten planen Oberfläche geführt werden. Insbesondere arbeitet ein solches System aus Positionsgeber und Messsensor optisch, insbesondere über Laser. Beim Bearbeiten eines oberen Segmentrandes erfolgt hierbei eine Ausrichtung des Positionsgebers in Bezug auf die Standfläche, insbesondere auf einem Bearbeitungsteller, auf dem das herzustellende oder weiter zu bearbeitende Turmsegment während der Bearbeitung steht.

Zum besseren Verständnis der Erfindung wird ein Verfahren zum Herstellen oder Bearbeiten einer planen Oberfläche eines Bearbeitungstellers und/oder eines Betonfundamentes beschrieben. Ein solcher Bearbeitungsteller ist eine Bearbeitungsunterlage, insbesondere eine Stahlplatte, die eine plane Oberfläche aufweist. Auf dieser planen Oberfläche werden zur Herstellung eines Betonsegmentes entsprechende Schalungen platziert, in die Beton zum Herstellen des betreffenden Betonsegmentes zu gießen ist. Hierbei ist die Ausrichtung des Betonsegments bereits senkrecht, also so, wie es auch in dem herzustellenden Betonturm ausgerichtet sein wird. Die Schalungen sind hierbei entsprechend unten offen, so dass der Beton unmittelbar auf dem Bearbeitungsteller gegossen wird. Die plane Oberfläche des Bearbeitungstellers bestimmt somit die Unterseite des herzustellenden Betonsegmentes. Im Übrigen stehen hierdurch auch die Schalungen senkrecht auf dem Bearbeitungsteller. Entsprechend ist eine plane Oberfläche mit hoher Qualität und insbesondere gut bekannter Ausrichtung des Bearbeitungstellers wichtig. Ähnlich wichtig ist auch eine möglichst waagerechte, plane Oberfläche eines Betonfundamentes, auf dem ein Betonturm senkrecht errichtet werden soll.

Das Verfahren zum Herstellen einer planen Oberfläche des Bearbeitungstellers und/oder des Betonfundamentes umfasst die Schritte des Anordnens eines Bearbeitungsmittels auf der zu bearbeitenden bzw. herzustellenden planen Oberfläche und das Verfahren des Bearbeitungsmittels entlang der planen Oberfläche und dabei Bearbeiten bzw. Herstellen der planen Oberfläche. Die Verfahrmittel werden hierbei auf einer, die plane Oberfläche umfassenden Ebene angeordnet. Das Bearbeitungsmittel wird also unmittelbar auf der Oberfläche des Bearbeitungstellers oder auf der Oberfläche des Betonfundamentes aufgesetzt. Das Bearbeitungsmittel umfasst dabei ein Bearbeitungswerkzeug zum Bearbeiten der planen Oberfläche, einen Tragrahmen zum Tragen des Bearbeitungswerkzeuges und mehrere Verfahrmittel zum Verfahren des Bearbeitungswerkzeuges entlang der planen Oberfläche. Das Bearbeitungswerkzeug wird dabei derart verfahren, dass der Tragrahmen verfahren wird.

Hierbei wird ein Bearbeitungsmittel verwendet, daswie oben beschrieben beschaffen ist. Hierdurch wird erreicht, dass ein Bearbeitungsmittel nicht nur für unterschiedliche Turmsegmente eingesetzt werden kann, sondern zudem auch noch zur Bearbeitung des Bearbeitungstellers und der Oberfläche des Fundamentes. Dies ist durch ein einziges Bearbeitungsmittel erreichbar. Lediglich kann es zweckmäßig sein, einen entsprechenden Bearbeitungskopf an die spezielle Aufgabe, insbesondere das spezielle Material, anzupassen, also für die jeweilige Bearbeitung eines Turmsegmentes, des Bearbeitungstellers oder des Turmfundamentes den Bearbeitungskopf zu tauschen. Die übrige Konstruktion des Bearbeitungsmittels kann aber gleich bleiben. Auch die plane bzw. planparallele Führung des Bearbeitungswerkzeuges kann mittels desselben oder ähnlichen Positionsgebers erfolgen, der ggf. auf die entsprechende Bearbeitungshöhe anzupassen ist.

Das Bearbeitungs- bzw. Herstellungsverfahren wird so ausgeführt, dass der Tragrahmen um eine Drehachse dreht, und sich also insbesondere um sich selbst dreht, und dabei das Bearbeitungswerkzeug entlang einer Kreisbahn führt. Die betreffende plane Oberfläche kann dann im Bereich dieser Kreisbahn bearbeitet werden. Rein vorsorglich wird darauf hingewiesen, dass eine besonders hohe Präzision für die plane Oberfläche, insbesondere auch die Planparallelität gefordert wird. Das exakte Abfahren der genannten Kreisbahn ist gegenüber Abweichungen toleranter, insbesondere wenn entlang der entsprechenden Kreisbahn ein großzügig breiter Bereich plan bearbeitet wird bzw. ein großzügig breiter Bearbeitungskopf vorgesehen ist. Dadurch kann bspw. beim Planbearbeiten des Turmfundamentes auf ein Schienensystem bzw. einer einzelnen Schiene zum Führen der Verfahrmittel und damit zum Führen des Bearbeitungsmittels verzichtet werden. Es kann aber auch dort eine Schiene oder ähnliches vorgesehen sein. Für die Planheit der planen Oberfläche sorgt aber der Positionsgeber im Zusammenspiel mit dem Messsensor, so dass eine Planheit mit hoher Güte und/oder Genauigkeit erreicht werden kann.

Erfindungsgemäß wird zudem ein Verfahren gemäß Anspruch 12 vorgeschlagen. Demnach wird das Bearbeitungsmittel entlang des Segmentrandes geführt, insbesondere verfahren, um dabei den oberen Segmentrand zu bearbeiten. Das Bearbeitungsmittel wird dabei durch die Tragvorrichtung entlang der Tragvorrichtung und dadurch entlang des Segmentrandes geführt. Dabei ist die Tragvorrichtung im Bereich des oberen Segmentrandes befestigt. Dabei wird der Segmentrand bearbeitet, während das Bearbeitungsmittel entlang des Segmentrandes bewegt wird. Das Bearbeiten des Segmentrandes kann dabei das Auftragen eines Harzes oder Zements und das Planbearbeiten des Segmentrandes beinhalten. Vorzugsweise wird hierbei in einem der ersten Schritt ein Harz oder Zement aufgetragen und in einem zweiten Schritt das Harz bzw. der Zement, insbesondere nach Aushärtung, planbearbeitet, insbesondere indem das Harz bzw. der Zement abgefräst oder abgeschliffen wird. Hierbei kann vorgesehen sein, dass für beide genannte Arbeitsgänge unterschiedliche Bearbeitungsmittel verwendet werden.

Vorzugsweise wird das Bearbeitungsmittel unter Zuhilfenahme des Messmittels so betrieben, dass die Bearbeitung bezogen auf die Standfläche des Turmsegments immer in gleicher Höhe erfolgt, insbesondere dass in Höhe einer virtuellen Messebene bearbeitet wird. Vorzugsweise ist die Tragvorrichtung an einer Schalung des Turmsegmentes befestigt und das wenigstens eine Bearbeitungsmittel fährt auf dieser Tragvorrichtung entlang des Segmentrandes.

Vorzugsweise wird ein Bearbeitungskopf des bzw. jedes Bearbeitungsmittels in der Höhe verändert, um dadurch die Höhe der Bearbeitung einzuhalten, selbst wenn das Bearbeitungsmittel auf der Tragvorrichtung nicht optimal in der gewünschten Ebene geführt wird.

Vorzugsweise umfasst das Bearbeiten des Segmentrandes das Auftragen eines Harzes oder Zements als Ausgleichsmasse und zusätzlich oder optional das Planbearbeiten des Segmentrandes, insbesondere der auf das Segment aufgetragenen Ausgleichsmasse.

Gemäß einer Ausführungsform wird vorgeschlagen, dass der Segmentrand, nämlich die Segmentoberseite, unmittelbar planbearbeitet wird, ohne dass zuvor eine Ausgleichsmasse aufgetragen wurde. Es erfolgt somit unmittelbar ein Bearbeiten des Materials des Segmentes, nämlich des Betons, aus dem das Segment gefertigt wurde. Das Planbearbeiten kann insbesondere als Abschleifen des Segmentes, also als Abschleifen des Betons, ausgeführt sein. Entsprechend wird ein dafür geeignetes Bearbeitungswerkzeug eingesetzt. Das Segment kann hierfür zunächst etwas höher als bisher gefertigt werden, bzw. etwas höher als die Höhe, die es schließlich beim Aufbau des Turmes aufweist. Bspw. kann das Segment um ca. 8 mm höher als bisher gebaut werden, wobei dann etwa bzw. im Mittel 4 mm beim Planbearbeiten von diesem Beton abgenommen werden, insbesondere abgeschliffen werden. Diese Werte können auch etwas höher und etwas niedriger ausfallen. Eine Ausgleichsschicht ist nicht mehr erforderlich.

Günstig ist es, eine erfindungsgemäße Bearbeitungsvorrichtung gemäß wenigstens einer der beschriebenen Ausführungsformen zu verwenden.

Weiterhin ist es vorteilhaft, beim Auftragen ein schnell härtendes Harz oder schnell härtender Zement, insbesondere ein Zweikomponentenharz oder -zement zu verwenden. Hierdurch kann vermieden werden, dass ein als Ausgleichsmittel verwendetes Harz oder Zement zunächst in einem geschlossenen Kanal aufgebracht werden muss und aushärten muss. Stattdessen wird das Verfahren gemäß einer Ausführungsform so vorgesehen, dass möglichst ohne Zeitverzögerung nach dem Auftragen des Ausgleichsmittels, insbesondere des Harzes oder Zements, ein materialabnehmender Schritt, insbesondere ein Abfräsen der gehärteten Ausgleichsmasse vorgenommen wird.

Unter einem schnell aushärtenden Harz oder Zement wird ein Harz oder Zement verstanden, das innerhalb von vier Stunden, vorzugsweise innerhalb von zwei Stunden, weiter vorzugsweise innerhalb von einer Stunde und insbesondere innerhalb von einer halben Stunde so weit aushärtet, dass es bearbeitet werden kann, insbesondere dass mittels einer Fräse ein Nachbearbeiten nämlich Glätten in Betracht kommt.

Erfindungsgemäß wird zudem eine Schalung gemäß Anspruch 19 vorgeschlagen. Eine solche Schalung zum Herstellen eines Turmsegmentes als Betonfertigteil ist dazu vorbereitet, dass Beton in die Schalung eingegossen wird, um als Turmsegment als Betonfertigteil auszuhärten. Dabei ist eine erfindungsgemäße Bearbeitungsvorrichtung vorgesehen, von der die Tragvorrichtung an der Schalung befestigt ist. Dadurch ist die Schalung zum Herstellen des Betonfertigteiles durch Gießen des Betons und zum Nachbearbeiten des oberen Segmentrandes zum Aufsetzen wenigstens eines weiteren Turmsegments vorbereitet.

Vorzugsweise weist die Schalung wenigstens ein inneres und ein äußeres Schalungsteil auf und die Tragvorrichtung der Bearbeitungsvorrichtung weist ein Schienensystem mit einer inneren und einer äußeren Schiene auf. Die innere Schiene ist dabei an dem inneren Schalungsteil und die äußere Schiene an dem äußeren Schalungsteil befestigt. Mit dem Bereitstellen der Schalung, nämlich dem entsprechenden Anordnen des inneren und äußeren Schalungsteils zueinander zum Gießen des Betons wird gleichzeitig damit auf einfache Art und Weise das Schienensystem und damit Tragvorrichtung der Bearbeitungsvorrichtung bereitgestellt. Vorzugsweise ist die Schalung, insbesondere das äußere Schalungsteil verfahrbar ausgebildet.

Die erfindungsgemäße Bearbeitungsvorrichtung gemäß einer der beschriebenen Ausführungsformen ist geeignet, um ein Turmsegment eines Turms einer Windenergieanlage herzustellen. Das Turmsegment kann mit einem erfindungsgemäßen Verfahren zum Beispiel unter Zuhilfenahme einer erfindungsgemäßen Schalung hergestellt werden. Insoweit ist es möglich, dass zum Herstellen und damit Endbearbeiten des oberen Segmentrandes des Turmsegmentes eine beschriebene Bearbeitungsvorrichtung verwendet wird. Diese Bearbeitungsvorrichtung zeichnet sich unter anderem durch das Führen des Bearbeitungsmittels auf einer Tragvorrichtung entlang des oberen Segmentrandes aus.

Die hierdurch durchgeführte Bearbeitung kann an einem fertig bearbeiteten Turmsegment an oberen Segmentrand erkannt bzw. nachgewiesen werden. Dies kann z.B. wenn das Bearbeitungsmittel den oberen Segmentrand plan gefräst hat, an dem Fräsbild ablesen werden, insbesondere wenn das Fräsbild die Führung des Bearbeitungsmittels erkennen lässt. Eine Verwendung eines schnell aushärtenden Harzes oder Zements kann durch eine Analyse des verwendeten Materials des oberen Segmentrandes festgestellt werden. Gegebenenfalls ist an dem Übergang des Ausgleichsmaterials zum Beton ablesbar, dass kein Aufnahmekanal zum Vorsehen des Ausgleichsmaterials verwendet wurde, sondern der Auftrag des Ausgleichsmaterials durch ein Auftragselement erfolgte, dass an dem oberen Segmentrand entlanggeführt wurde.

Nachfolgend wird die Erfindung anhand von Ausführungsbeispielen unter Bezugnahme auf die begleitenden Figuren exemplarisch erläutert.
- Fig. 1: zeigt eine typische Windenergieanlage schematisch und perspektivisch, die einen Betonturm aufweist, der aus erfindungsgemäßen bzw. erfindungsgemäß hergestellten Turmsegmenten aufgebaut ist.
- Fig. 2: zeigt einen Gesamtaufbau einer Schalung mit Bearbeitungsvorrichtung und Messsystem schematisch in einer perspektivischen Darstellung.
- Fig. 3: zeigt eine Fahrvorrichtung einer Bearbeitungsvorrichtung in einer perspektivischen Darstellung.
- Fig. 4: zeigt ein Bearbeitungsmittel mit Fahrvorrichtung und Bearbeitungswerkzeug in einer perspektivischen Darstellung.
- Fig. 5: zeigt ein Bearbeitungswerkzeug zum Fräsen einer perspektivischen Darstellung.
- Fig. 6: zeigt ein Bearbeitungswerkzeug zum Auftragen einer Ausgleichsmasse in einer perspektivischen Darstellung.
- Fig. 7: zeigt etwa einen Teil einer geöffneten Auftragsdüse eines Bearbeitungswerkzeugs gemäß Fig. 6 in einer perspektivischen Darstellung.
- Fig. 8: zeigt eine schematische Draufsicht auf ein Betonfertigteil mit Führungsbahn.
- Fig. 9: zeigt in einer Draufsicht schematisch ein Bearbeitungsmittel gemäß einer weiteren Ausführung.
- Fig. 10: zeigt in einer Draufsicht schematisch eine Gesamtansicht eines Betonfertigteils gemäß Figur 8 mit einem Bearbeitungsmittel gemäß Figur 9.

Nachfolgend können gleiche Bezugszeichen für ähnliche aber nicht identische Elemente verwendet werden, um deren funktionalen Zusammenhang zu verdeutlichen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

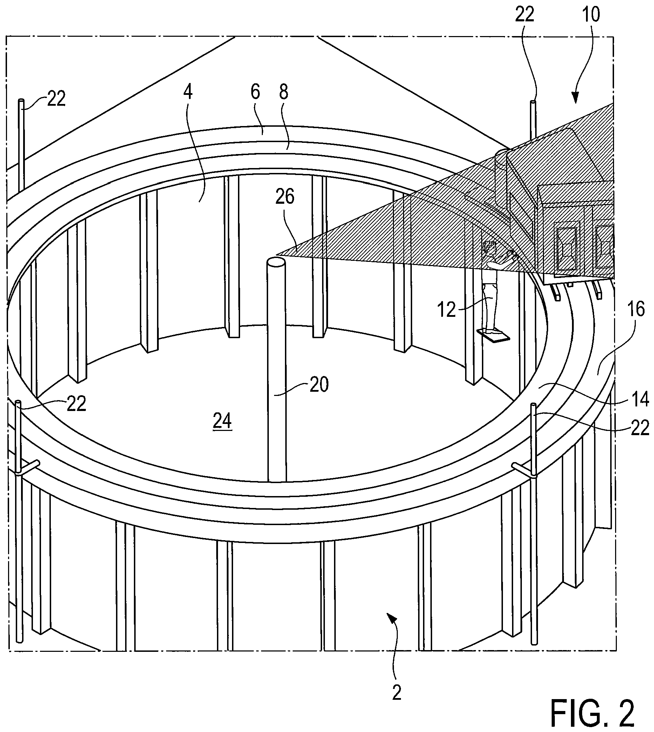

Fig. 2 zeigt schematisch eine Schalung 2 mit einem inneren Schalungsteil 4 und einem äußeren Schalungsteil 6. Zwischen dem inneren und äußeren Schalungsteil 4, 6 bildet sich ein Ringspalt, in den Beton zum Herstellen eines Turmsegmentes eingegossen wird. Von einem solchen Turmsegment ist in der Fig. 2 nur noch dessen oberer Segmentrand 8 zu erkennen. Fig. 2 veranschaulicht den Zustand, in dem das Turmsegment bereits gegossen und der Beton ausgehärtet ist. Nun kann eine Nachbearbeitung des oberen Segmentrandes 8 erfolgen und hierfür ist schematisch das Bearbeitungsmittel 10 dargestellt. Das Bearbeitungsmittel 10 ist auf einem Schienensystem verfahrbar, das zwei Schienen aufweist, von denen eine auf dem inneren Schalungsteil 4 und eine andere auf dem äußeren Schalungsteil 6 angeordnet sind, wobei die vereinfachte Darstellung der Fig. 2 die Schiene nicht erkennen lässt. Das Schienensystem ist zusammen mit dem Bearbeitungsmittel 10 als Bearbeitungsvorrichtung zum Bearbeiten des oberen Segmentrandes 8 zu bezeichnen, wobei weitere Elemente Teil der Bearbeitungsvorrichtung sein können.

In der Nähe des Bearbeitungsmittels 10 ist zur Veranschaulichung der Größenverhältnisse eine Person 12 eingezeichnet.

Das Bearbeitungsmittel 10 wird entlang des oberen Segmentrandes 8 und damit entlang der Oberkanten 14 bzw. 16 des inneren bzw. äußeren Schalungsteils 4, 6 geführt. Zum Vermessen und Steuern des Bearbeitungsmittels 10 ist ein Messsystem vorgesehen, das gemäß Fig. 2 einen Positionsgeber 20 und vier Ausrichtmittel 22 umfasst. Der Positionsgeber 20 ist auf einer Standfläche 24 und in der Mitte in der Schalung 2 angeordnet. Die vier Ausrichtmittel 22 sind von außen an der Schalung 2, nämlich an dem äußeren Schalungsteil 6 - das aus wenigstens zwei zusammensetzbaren Elementen aufgebaut ist - angeordnet und befestigt. Der Positionsgeber 20 sendet einen Laser 26 in Richtung auf das Bearbeitungsmittel 10 aus. Dieser Laser 26, der in mehrere Richtungen ausgesendet wird, definiert dadurch eine virtuelle Messebene, die zu der Standfläche 24 planparallel ausgebildet ist. Im Grunde wird diese virtuelle Messebene durch die vier Ausrichtmittel 22 aufgespannt. Der Positionsgeber 20 kann mithilfe dieser vier Ausrichtmittel 22 ausgerichtet werden, so dass der ausgesendete Laser 26 tatsächlich präzise die virtuelle Messebene wiedergibt, die entsprechend präzise planparallel zu der Standfläche 24 ausgebildet ist.

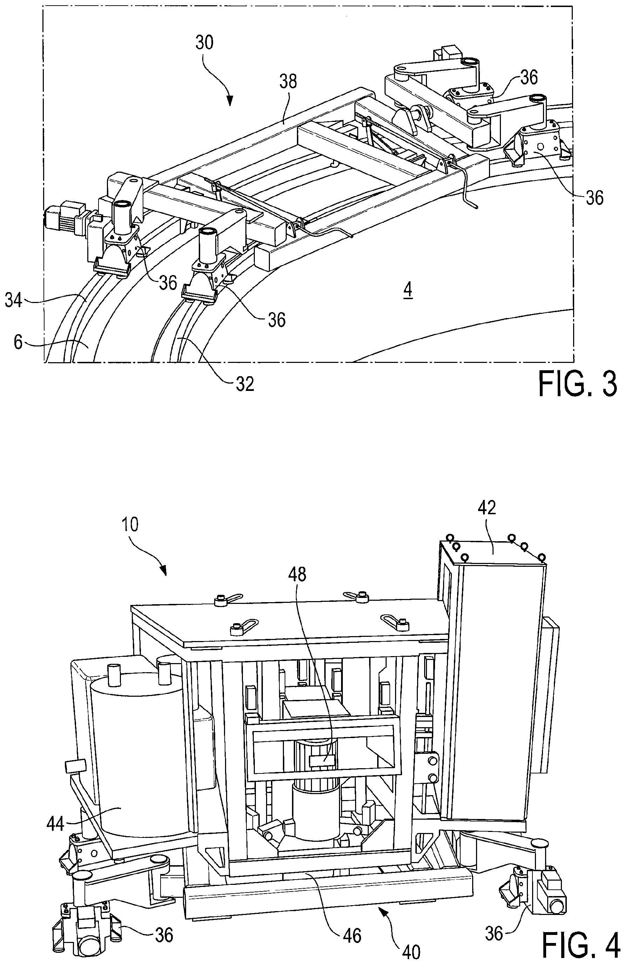

Fig. 3 zeigt eine Fahrvorrichtung 30, die auf einer inneren und äußeren Schiene 32, 34 getragen und geführt wird. Die innere und äußere Schiene 32, 34, die zusammen im Wesentlichen ein Schienensystem und damit eine Tragvorrichtung bilden, sind auf einem inneren bzw. äußeren Schalungsteil 4, 6 befestigt. Zwischen dem inneren und äußeren Schalungsteil 4, 6 ist der obere Segmentrand 8 zu erkennen. Die Fahrvorrichtung weist vier Schienenführungen 36 auf, mittels derer die Fahrvorrichtung 30 auf den beiden Schienen 32, 34 beweglich getragen und geführt wird. Die Fahrvorrichtung 30 kann somit entlang der inneren und äußeren Schiene und damit entlang des oberen Segmentrandes 8 geführt und bewegt werden. Die Fahrvorrichtung 30 weist dabei einen Aufnahmerahmen 38 zum Aufnehmen eines Bearbeitungswerkzeugs auf. Somit kann ein in dem Aufnahmerahmen 38 aufgenommenes Bearbeitungswerkzeug entlang des oberen Segmentrandes 8 bewegt werden.

Fig. 4 zeigt eine Fahrvorrichtung 30 mit einem in dem Aufnahmerahmen 38 aufgenommenen Bearbeitungswerkzeug 40 nebst Steuerungsvorrichtung 42 mit weiteren Funktionseinheiten wie einer Absaugung 44. Das Bearbeitungswerkzeug 40 der Fig. 4 ist als Fräsvorrichtung vorgesehen und verfügt entsprechend über einen Fräskopf 46 sowie einen Detektor 48.

Fig. 4 zeigt somit insgesamt ein Bearbeitungsmittel 10, das zum Planfräsen des oberen Segmentrandes ausgebildet ist. Das Bearbeitungsmittel 10 erkennt dabei seine Position relativ zur imaginären Messebene und kann zum Ausgleich den Fräskopf 46 in der Höhe anpassen, so dass der Fräskopf 46 immer in derselben Höhe - bezogen auf die virtuelle Messebene bzw. bezogen auf die Standfläche - geführt wird. Hierbei orientiert sich das Bearbeitungsmittel 10, insbesondere die Steuerungsvorrichtung 42 an der virtuellen Messebene, wie sie durch einen entsprechenden Laser vom Positionsgeber des Messsystems zur Orientierung zur Verfügung gestellt wird.

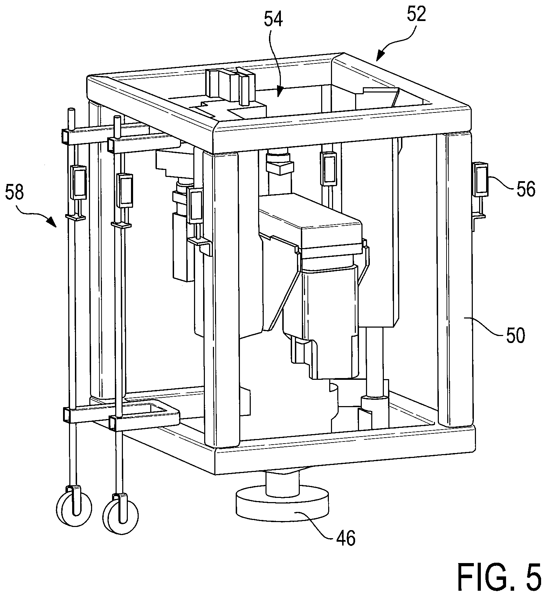

Fig. 5 zeigt einen Teil des Bearbeitungswerkzeugs 40, nämlich insbesondere die in einen Fräsrahmen 50 aufgenommene Fräsvorrichtung 52. Diese Fräsvorrichtung 52 beinhaltet eine Fräskopfüberwachung 54, die überprüft, ob der Fräskopf 46 korrekt arbeitet. Weiterhin ist eine Fräswagenüberwachung 56 vorgesehen, die die Position der Fräsvorrichtung 52 auf der Fahrvorrichtung 30 (gemäß Fig. 4) überwacht. Mittels einer Fugenoberflächenüberwachung 58 kann die Oberfläche des oberen Segmentrandes, nämlich insbesondere das Fräsergebnis auf der Oberfläche des oberen Segmentrandes überwacht werden. Hierdurch werden etwaige Unebenheiten, die durch Störung des Fräsvorgangs verursacht sein könnten, erkannt, um Fehler rechtzeitig zu erkennen und/oder um Nachbereitungen auslösen zu können.

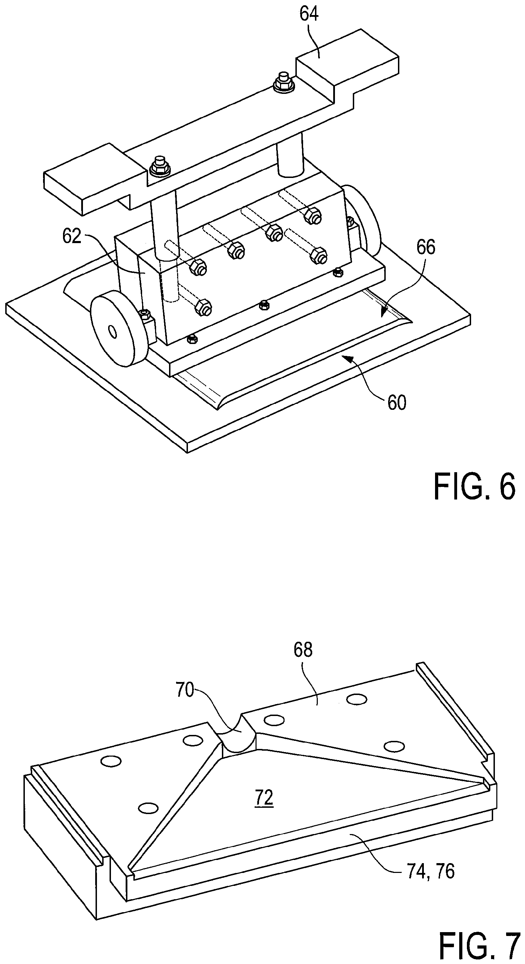

Fig. 6 zeigt als Bearbeitungswerkzeug eine Harz- oder Zementauftragsvorrichtung 60. Die Harz- oder Zementauftragsvorrichtung 60 kann ebenfalls von einer Fahrvorrichtung 30 (gemäß Fig. 3) aufgenommen und mit entsprechender Steuerung und Versorgungsleitung versehen zur Bearbeitung des oberen Segmentrandes verwendet werden. Die Harz- oder Zementauftragsvorrichtung 60 weist hierfür im Wesentlichen eine breite Schlitzdüse 62 auf, von der in der Fig. 6 im Wesentlichen ein Gehäuse von außen zu erkennen ist. Die Schlitzdüse 62 wird im Gebrauch an einer Halterung 64 gehalten und in der Fahrvorrichtung 30 geführt. An die Schlitzdüse schließt sich nach unten eine Abgabeplatte 66 an, die einen gleichmäßigen Harz- oder Zementauftrag begünstigen soll.

Fig. 7 zeigt einen Teil der Schlitzdüse 62 der Fig. 6, nämlich eine Düsenbacke 68. Die Düsenbacke 68 lässt eine Zuführöffnung 70 zum Zuführen des aufzutragenden Harzes oder Zements erkennen, von der aus das Harz oder der Zement, nachdem es/er vorzugsweise aus zwei Komponenten gemischt wurde, in den etwa dreiecksförmigen Verteilungsbereich 72 gelangt, um dann zu einem schmalen Schlitz 74 zu gelangen, von dem die Düsenbacke 68 eine entsprechende Austrittskante 76 zeigt, und dort aus der Düse auszutreten.

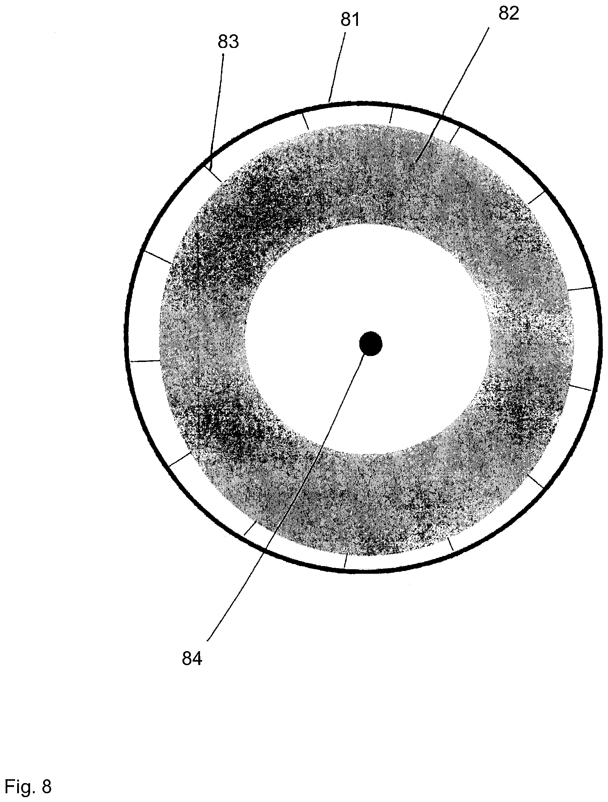

Fig. 8 zeigt die Draufsicht für eine Schalung für ein Betonfertigteil 82 mit einem Führungssystem für ein Bearbeitungsmittel 86, nämlich einen Verfahrwagen 86. Das Führungssystem 81, das auch als Tragvorrichtung bezeichnet werden kann, kann aus einer Schiene 81 oder einer anders gearteten Führung bestehen. Die Schiene 81 ist mit Streben 83 an der Schalung 82 für das Betonfertigteil verbunden. In der Mitte der Schalung 82 befindet sich ein Positionsgeber 84, der auch einfach als Laser 84 bezeichnet werden kann, der dazu dient den Fräskopf 88 auszurichten, damit dieser die Oberfläche auf dem Betonfertigteil bearbeiten kann. Das Ziel ist es die Oberfläche des Betonfertigteils planparallel zu fertigen, nämlich eine plane Oberfläche an der Oberseite des Betonfertigteils zu schaffen, die planparallel zu ihrer Unterseite bzw. Standseite ist, damit auf der Baustelle beim Errichten des Betonturms die Betonfertigteile übereinander angebracht werden können, ohne dabei Zement oder Mörtel als Ausgleichsmasse zu verwenden.

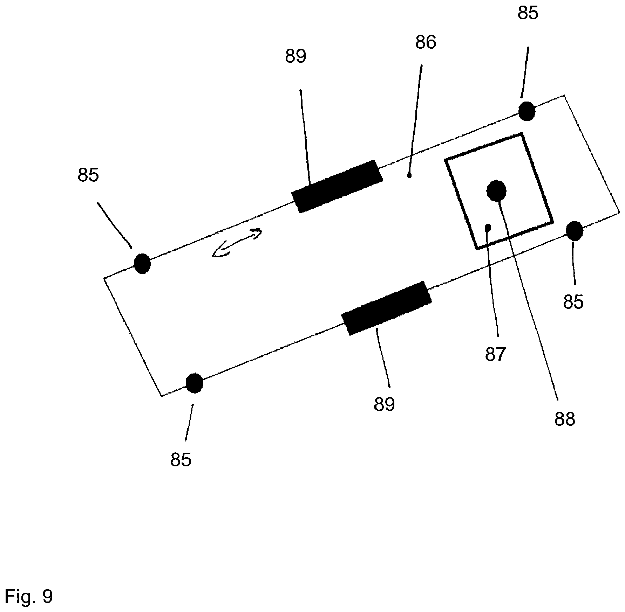

Fig. 9 zeigt den Verfahrwagen 86, nämlich ein Bearbeitungsmittel zum Bearbeiten einer planen Oberfläche. Der Verfahrwagen 86 wird auf das Führungssystem 81, nämlich die gezeigte etwa kreisförmig umlaufende Schiene 86, gestellt. Auf dem Verfahrwagen 86 befindet sich eine Fräseinrichtung 87, die vereinfacht auch als Fräse 87 bezeichnet werden kann. Die Fräse 87 bildet somit in dem erläuterten Beispiel ein Bearbeitungswerkzeug und kann alternativ bspw. auch als Schleifeinrichtung ausgeführt sein. Die Fräseinrichtung stellt die Planparallelität auf dem Betonfertigteil her, indem sie die Oberfläche des Betonfertigteils abfräst, nämlich plan fräst. Der Verfahrwagen 86 wird hierfür durch Rollen 85 oder alternativ auch Reifen, die ein weiteres Beispiel für die Verfahrmittel darstellen, entlang des Führungssystems 81 bewegt. Die Rollen 85 können individuell über einen oder mehrere Motoren angetrieben werden. Ein Betonturm einer Windenergieanlage besteht aus vielen verschiedenen Turmsegmenten, nämlich Fertigbetonsegmenten, die jeweils in der Fertigung eine eigene Schalung benötigen. Da der Turm konisch verläuft, werden die Durchmesser der Schalungen für die einzelnen Segmente immer kleiner, je höher die Turmsegmente im Betonturm anzuordnen sind. Damit der Verfahrwagen 86 sich den verschiedenen Schalungen anpassen kann, wird dieser, insbesondere sein Tragrahmen, durch die Verstelleinrichtungen 89 in der Länge verstellt. Alle notwendigen Steuerungseinrichtungen für den Fräskopf 88 und für die Steuerung des Verfahrwagens 86 befinden sich auf dem Bearbeitungswerkzeug, nämlich der Fräse 87.

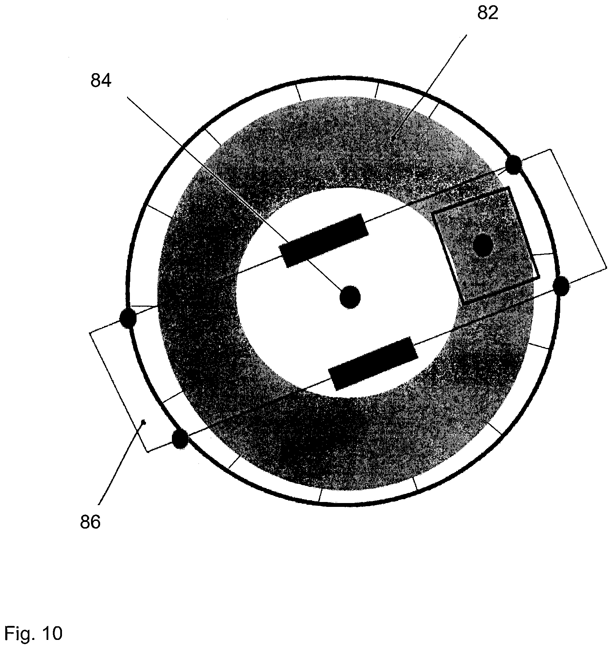

Fig. 10 zeigt die Gesamtansicht vom Verfahrwagen 86, der auf der Schalung des Betonfertigteils 82 angeordnet ist. In der Mitte befindet sich ein Laser 84, der als Positionsgeber arbeitet und eine Führungsebene für den Verfahrwagen aufspannt. Diese Ebene wird vom Verfahrwagen 86 mittels eines Messsensors erfasst und die Position des Fräskopfs 88 wir entsprechend angepasst. Alternativ oder zusätzlich können auch mehrere Laser außen an der Schalung angebracht sein, falls der Laser 84 nicht mehr detektiert wird und/oder zum Ausrichten des zentralen Lasers 84, oder falls für eine genauere Bestimmung der Position des Verfahrwagens und/oder des Positionsgebers weitere Messpunkte benötigt werden.

Die Nutzung der Verfahrwagens 86 ist nicht nur auf die Fertigung von Betonfertigteilen für Türme von Windenergieanlagen beschränkt. Es kann alternativ auch zum planparallelen bzw. planen Bearbeiten von Fundamentoberflächen für Windenergieanlagen benutzt werden. Unter einer planparallelen Bearbeitung der Fundamentoberfläche ist hier eine Planparallelität der Fundamentoberfläche in Bezug auf eine waagerechte, plane Ebene zu verstehen. Fundamente werden für eine Windenergieanlage benötigt, damit diese ihre Last in das Erdreich ableiten kann. Bei der Errichtung des Turms, im vorliegenden Fall, also des Betonturms, einer Windenergieanlage muss das erste Segment des Turms genau waagerecht auf dem Fundament aufgesetzt werden. Hierzu ist es notwendig, das sowohl die Unterseite des ersten Turmsegments als auch die Oberfläche des Fundaments, an den Stellen wo das Segment installiert wird planparallel bzw. plan sind. Zum Herstellen dieser ebenen Fläche auf dem Fundament kann dieselbe Anordnung aus Fig. 8 verwendet werden, nur mit dem Unterschied, dass das Führungssystem 81 nicht an einer Schalung, sondern auf dem Fundament angebracht ist.

Ferner kann die Vorrichtung aus Fig. 10 dazu benutzt werden eine Stahl- oder auch Metallscheibe planparallel zu bearbeiten. Eine solche kommt bei der Herstellung von Betonfertigteilen zum Einsatz. Die Schalung wird auf eine solche Metallscheibe gestellt, welche auch als Bearbeitungsteller bezeichnet wird und im Wesentlichen eine planparallele bzw. plane Oberfläche aufweist. Beim Gießen des Segments wird somit die Planparallelität bzw. Planarität der Unterseite des Segmentes durch die Scheibe bzw. den Bearbeitungsteller hergestellt und auf der Oberseite des Segmentes durch die Fräse. Die Scheibe muss ca. 1-mal jährlich nachgearbeitet werden, damit die Planparallelität wieder hergestellt ist. Dieser Vorgang wird durch die Vorrichtung aus Fig. 10 vorgenommen.

## Patentansprüche

1. Bearbeitungsvorrichtung zum Bearbeiten eines oberen Segmentrandes (8) eines Turmsegmentes eines Betonturms (102) zum Vorbereiten des Turmsegments zum Aufsetzen wenigstens eines weiteren Turmsegments, umfassend
- ein Bearbeitungsmittel (10) zum Bearbeiten des Segmentrandes (8) **gekennzeichnet durch**
- eine Tragvorrichtung (32, 34), die an der Oberseite einer Schalung zum Herstellen des Turmsegmentes befestigt ist, wobei die Tragvorrichtung (32, 34) zum verfahrbaren Tragen und Führen des Bearbeitungsmittels (10) entlang des oberen Segmentrandes (8) ausgebildet ist.

2. Bearbeitungsvorrichtung nach Anspruch 1,
**gekennzeichnet, durch** ein Messmittel (20,22) zum Bestimmen der Position des Bearbeitungsmittels (10) in Bezug auf eine zu einer Standfläche planparallelen Bearbeitungsebene.

3. Bearbeitungsvorrichtung nach Anspruch 2, **dadurch gekennzeichnet, dass** das Messmittel (20,22) bzw. ein Messmittel (20,22) zum Bestimmen der Position des Bearbeitungsmittels (10)
- einen Positionsgeber (20) zum Messen und Übertragen der Position des Bearbeitungsmittels (10) aufweist sowie optional
- wenigstens ein, insbesondere 3, 4 oder 5 Ausrichtmittel (22), zum Ausrichten oder zum Unterstützen des Ausrichtens des Positionsgebers (20) in Bezug auf die Standfläche.

4. Bearbeitungsvorrichtung nach Anspruch 2 oder 3, **dadurch gekennzeichnet, dass** das Messmittel (20,22) als Lasermessmittel ausgebildet ist.

5. Bearbeitungsvorrichtung nach einem der vorstehenden Ansprüche,
**dadurch gekennzeichnet, dass** die Tragvorrichtung als Schienensystem (32; 34), insbesondere mit einem Schienenpaar (32; 34) ausgebildet ist.

6. Bearbeitungsvorrichtung nach einem der vorstehenden Ansprüche,
**dadurch gekennzeichnet, dass**
- das Bearbeitungsmittel (10) als verfahrbares Auftragsmittel zum Auftragen einer Ausgleichsmasse, insbesondere eines Harzes oder Zements ausgebildet ist und/oder dass
- das Bearbeitungsmittel (10) oder ein weiteres Bearbeitungsmittel als materialabnehmende Vorrichtung, insbesondere als Fräsvorrichtung und/oder als Schleifvorrichtung ausgebildet ist und/oder dass
- das Bearbeitungsmittel (10) eine Fahrvorrichtung (30) aufweist, zum Verfahren entlang der Tragvorrichtung (32, 34), wobei die Fahrvorrichtung (30) zum Aufnehmen eines Bearbeitungswerkzeugs (40) ausgebildet ist.

7. Bearbeitungsvorrichtung nach einem der vorstehende Ansprüche,
**dadurch gekennzeichnet, dass** das Bearbeitungsmittel (10) einen in der Höhe beweglichen Arbeitskopf (46) aufweist.

8. Bearbeitungsmittel (10) zum Bearbeiten und/oder Herstellen einer planen Oberfläche, insbesondere eines oberen Segmentrandes (8) eines Turmsegmentes eines Betonturms (102), zum Vorbereiten des Errichtens eines Betonturmes, umfassend
- ein Bearbeitungswerkzeug (40) zum Bearbeiten bzw. Herstellen der planen Oberfläche,
**gekennzeichnet durch**
- eine Tragvorrichtung (32, 34), die an der Oberseite einer Schalung zum Herstellen des Turmsegmentes befestigt ist, wobei die Tragvorrichtung (32, 34) einen Tragrahmen zum Tragen des Bearbeitungswerkzeugs (40) und mehrere Verfahrmittel zum Verfahren des Bearbeitungswerkzeugs (40) entlang der planen Oberfläche aufweist, wobei
- die Verfahrmittel zum Verfahren entlang der planen Oberfläche und/oder zum Verfahren entlang der Tragvorrichtung vorbereitet sind.

9. Bearbeitungsmittel (10) nach Anspruch 8 , **dadurch gekennzeichnet, dass** die Verfahrmittel zum Verfahren entlang einer Bahn eines Kreises vorbereitet sind, wobei insbesondere der Tragrahmen den Kreis überspannt und/oder dass das Bearbeitungsmittel (10) dazu vorbereitet ist, dass der Tragrahmen um eine Drehachse dreht, die insbesondere durch den Tragrahmen hindurch verläuft, und dadurch das Bearbeitungswerkzeug (40) entlang einer Kreisbahn geführt wird, um die plane Oberfläche im Bereich dieser Kreisbahn zu bearbeiten.

10. Bearbeitungsmittel (10) nach einem der Ansprüche 8 oder9, **dadurch gekennzeichnet, dass** der Tragrahmen in einer Länge verstellbar ist, um dadurch einen Abstand zwischen wenigstens zweien der Verfahrmittel zu verändern, insbesondere um dadurch eine Verfahrbarkeit entlang Bahnen unterschiedlich großer Kreise zu schaffen.

11. Bearbeitungsmittel (10) nach einem der Ansprüche 8 bis 10, umfassend einen Messsensor, angepasst an einen Positionsgeber (20), zum Führen des Bearbeitungswerkzeugs (40) entlang der herzustellenden bzw. zu bearbeitenden, durch den Positionsgeber (20) festgelegten, planen Oberfläche.

12. Verfahren zum Bearbeiten eines oberen Segmentrandes eines Turmsegmentes eines Betonturms (102) zum Vorbereiten des Turmsegments zum Aufsetzen wenigstens eines weiteren Turmsegments, **gekennzeichnet durch** die Schritte
- Befestigen einer Tragvorrichtung an der Oberseite einer Schalung zum Herstellen des Turmsegmentes;
- Bewegen eines an der Tragvorrichtung (32, 34) angeordneten Bearbeitungsmittels (10) entlang des Segmentrandes (8) zum Bearbeiten des Segmentrandes (8), wobei das Bearbeitungsmittel (10) entlang der Tragvorrichtung (32; 34) und dadurch entlang des Segmentrands (8) geführt wird,
- Bearbeiten des Segmentrandes (8), durch das Bearbeitungsmittel (10), während der Bewegung des Bearbeitungsmittels (10) entlang des Segmentrandes (10).

13. Verfahren nach Anspruch 12,
**dadurch gekennzeichnet, dass** das Bearbeitungsmittel (10) unter Zuhilfenahme eines Messmittels (20,22) so betrieben wird, dass die Bearbeitung bezogen auf die Standfläche immer in gleicher Höhe erfolgt.

14. Verfahren nach Anspruch 12 oder 13,
**dadurch gekennzeichnet, dass** das Bearbeitungsmittel (10) auf der Tragvorrichtung (32; 34) fährt, wobei die Tragvorrichtung (32; 34) insbesondere an einer Schalung des Turmsegmentes befestigt ist.

15. Verfahren nach einem der Ansprüche 12 bis 14,
**dadurch gekennzeichnet, dass** ein Bearbeitungskopf (46) des Bearbeitungsmittels (10) in der Höhe verändert wird, um die Höhe einer gewünschte Bearbeitung einzuhalten.

16. Verfahren nach einem der Ansprüche 12 bis 15,
**dadurch gekennzeichnet, dass** das Auftragen eines Harzes oder Zements als Ausgleichsmasse und/oder Planbearbeiten des Segmentrandes (8), insbesondere einer bzw. der auf das Segment aufgetragenen Ausgleichsmasse, umfasst ist.

17. Verfahren nach einem der Ansprüche 12 bis 16,
**dadurch gekennzeichnet, dass** eine Vorrichtung nach einem der Ansprüche 1 bis 7 verwendet wird, und/oder dass ein Bearbeitungsmittel nach einem der Ansprüche 8 bis 11 verwendet wird.

18. Verfahren nach einem der Ansprüche 12 bis 17,
**dadurch gekennzeichnet, dass** der Bearbeitungsschritt das Auftragen eines schnell härtenden Harzes oder Zements, insbesondere eines Zweikomponentenharzes oder -zements, umfasst.

19. Schalung (2) zum Herstellen eines Turmsegmentes als Betonfertigteil, umfassend eine Bearbeitungsvorrichtung nach einem der Ansprüche 1 bis 8, wobei die Tragvorrichtung (32; 34) an der Schalung befestigt ist.

20. Schalung (2) nach Anspruch 19,
**dadurch gekennzeichnet, dass** die Schalung (2) ein inneres und ein äußeres Schalungsteil (4,6) aufweist und die Tragvorrichtung (32, 34) ein Schienensystem (32,34) mit einer inneren und/oder einer äußeren Schien (32, 34) aufweist und die innere Schiene (32) an dem inneren Schalungsteil (4) und die äußere Schiene (34) an dem äußeren Schalungsteil (6) befestigt ist.

## Claims

1. A processing apparatus for processing an upper segment edge (8) of a pylon segment of a concrete pylon (102) for preparing the pylon segment for placement thereon of at least one further pylon segment, including
- a processing means (10) for processing the segment edge (8), **characterized by**
- a carrier apparatus (32, 34), adapted to be fixed to the upper side of the shuttering for producing the pylon segment, wherein the carrier apparatus (32, 34) is adapted for displaceably carrying and guiding the processing means (10) along the segment edge (8).

2. A processing apparatus according to claim 1 **characterised by** a measuring means (20, 22) for determining the position of the processing means (10) in relation to a processing plane in plane-parallel relationship with the support base surface.

3. Processing apparatus according to claim 1 **characterised in that** the measuring means (20, 22) or a measuring means (20, 22) for determining the position of the processing means (10) has
- a position sensor (20) for measuring and transmitting the position of the processing means (10), and optionally
- at least one, in particular 3, 4 or 5 orienting means (22) for orienting or for assisting orienting of the position sensor (20) in relation to the support base surface.

4. A processing apparatus according to claim 2 or 3 **characterised in that** the measuring means (20, 22) is in the form of a laser measuring means.

5. A processing apparatus according to one of the preceding claims **characterised in that** the carrier apparatus is in the form of a rail system (32; 34), in particular with a pair of rails (32; 34).

6. A processing apparatus according to one of the preceding claims **characterised in that**
- the processing means (10) is in the form of a displaceable application means for applying a compensating material, in particular a resin or cement, and/or
- the processing means (10) or a further processing means is in the form of a material-removing apparatus, in particular in the form of a milling apparatus and/or in the form of a grinding apparatus and/or
- the processing means (10) has a travel apparatus (30) for displacement along the carrier apparatus (32, 34), wherein the travel apparatus (30) is adapted to receive a processing tool (40).

7. A processing apparatus according to one of the preceding claims **characterised in that** the processing means (10) has a working head (46) which is movable in height.

8. A processing means (10) for processing and/or producing a planar surface, in particular an upper segment edge (8) of a pylon segment of a concrete pylon (102) for preparing for erection of a concrete pylon, including
- a processing tool (40) for processing or producing the planar surface, **characterized by**
- a carrier apparatus (32, 34), fixed to the upper side of the shuttering for producing the pylon segment, wherein the carrier apparatus (32, 34) comprises a carrier frame for carrying the processing tool (40), and a plurality of displacement means for displacement of the processing tool (40) along the planar surface, wherein
- the displacement means are adapted for displacement along the planar surface and/or for displacement along the carrier apparatus.

9. A processing means (10) according to claim 8 **characterised in that** the displacement means are adapted for displacement along a path of a circle, wherein in particular the carrier frame spans over the circle and/or the processing means (10) is so adapted that the carrier frame rotates about an axis of rotation which extends in particular through the carrier frame and thereby the processing tool (40) is guided along a circular path to process the planar surface in the region of said circular path.

10. A processing means (10) according to one of claims 8 or 9 **characterised in that** the carrier frame is adjustable in length in order thereby to alter a spacing between at least two of the displacement means, in particular in order thereby to provide displaceability along paths of circles of differing sizes.

11. A processing means (10) according to one of claims 8 to 10 including a measuring sensor adapted to a position sensor (20) for guiding the processing tool (40) along the planar surface which is to be produced or processed and which is established by the position sensor(20).

12. A method of processing an upper segment edge of a pylon segment of a concrete pylon (102) for preparing the pylon segment for the placement thereon of at least one further pylon segment, **characterized by** the steps:
- attaching a carrier apparatus to the upper side of the shuttering for producing the pylon segment
- moving a processing means (10) along the segment edge (8) for processing the segment edge (8), wherein the processing means (10) is guided by a carrier apparatus (32, 34) fixed in the region of the segment edge (8) along the carrier apparatus (32, 34) and thereby along the segment edge (8),
- processing the segment edge (8) by the processing means (10) during the movement of the processing means (10) along the segment edge (8).

13. A method according to claim 12 **characterised in that** the processing means (10) is operated by means of a measuring means (20, 22) in such a way that the processing operation is always effected at the same height with respect to the support base surface.

14. A method according to claim 12 or claim 13 **characterised in that** the processing means (10) travels on the carrier apparatus (32, 34), wherein the carrier apparatus (32, 34) is fixed in particular to a shuttering of the pylon segment.

15. A method according to one of claims 12 to 14 **characterised in that** a processing head (46) of the processing means (10) is varied in height to preserve the height of a desired processing operation.

16. A method according to one of claims 12 to 15 **characterised in that** the application of a resin or cement as a compensating material and/or planar processing of the segment edge (8), in particular a or the compensating material applied to the segment, is included.

17. A method according to one of claims 12 to 16 **characterised in that** an apparatus according to one of claims 1 to 7 is used and/or a processing means according to one of claims 8 to 11 is used.

18. A method according to one of claims 12 to 17 **characterised in that** the processing step includes the application of a quick-hardening resin or cement, in particular a two-component resin or cement.

19. A shuttering (2) for producing a pylon segment in the form of a precast concrete member, including a processing apparatus according to one of claims 1 to 8, wherein the carrier apparatus (32; 34) is fixed to the shuttering.

20. A shuttering (2) according to claim 19 **characterised in that** the shuttering (2) has an inner and an outer shuttering portion (4, 6) and the carrier apparatus (32, 34) has a rail system (32, 34) with an inner and/or an outer rail (32, 34) and the inner rail (32) is fixed to the inner shuttering portion (4) and the outer rail (34) is fixed to the outer shuttering portion (6).

## Revendications

1. Dispositif d'usinage servant à usiner un bord de segment (8) supérieur d'un segment de mât d'un mât en béton (102) afin de préparer le segment de mât pour le placement d'au moins un autre segment de mât, comprenant
- un moyen d'usinage (10) servant à usiner le bord de segment (8), **caractérisé par**
- un dispositif porteur (32, 34), qui est fixé au niveau du côté supérieur d'un coffrage pour fabriquer le segment de mât, dans lequel le dispositif porteur (32, 34) est réalisé pour supporter de manière mobile et guider le moyen d'usinage (10) le long du bord de segment (8) supérieur.

2. Dispositif d'usinage selon la revendication 1, **caractérisé par** un moyen de mesure (20, 22) servant à définir la position du moyen d'usinage (10) par rapport à un plan d'usinage plan parallèle par rapport à une surface d'appui.

3. Dispositif d'usinage selon la revendication 2, **caractérisé en ce que** le moyen de mesure (20, 22) ou un moyen de mesure (20, 22) servant à définir la position du moyen d'usinage (10)
- présente une sonde de position (20) servant à mesurer et à transmettre la position du moyen d'usinage (10), ainsi qu'en option
- au moins un, en particulier 3, 4 ou 5 moyens d'orientation (22) servant à orienter ou à soutenir l'orientation de la sonde de position (20) par rapport à la surface d'appui.

4. Dispositif d'usinage selon la revendication 2 ou 3,
**caractérisé en ce que** le moyen de mesure (20, 22) est réalisé sous la forme d'un moyen de mesure au laser.

5. Dispositif d'usinage selon l'une quelconque des revendications précédentes,
**caractérisé en ce que** le dispositif porteur est réalisé sous la forme d'un système de rails (32 ; 34), en particulier avec une paire de rails (32 ; 34).

6. Dispositif d'usinage selon l'une quelconque des revendications précédentes,
**caractérisé en ce que**
- le moyen d'usinage (10) est réalisé sous la forme d'un moyen d'application mobile servant à appliquer une matière de compensation, en particulier une résine ou un ciment, et/ou que
- le moyen d'usinage (10) ou un autre moyen d'usinage est réalisé sous la forme d'un dispositif d'enlèvement de matériau, en particulier sous la forme d'un dispositif de fraisage et/ou sous la forme d'un dispositif de ponçage, et/ou que
- le moyen d'usinage (10) présente un dispositif de déplacement (30) destiné à être déplacé le long du dispositif porteur (32, 34), dans lequel le dispositif de déplacement (30) est réalisé pour recevoir un outil d'usinage (40).

7. Dispositif d'usinage selon l'une quelconque des revendications précédentes,
**caractérisé en ce que** le moyen d'usinage (10) présente une tête de travail (46) mobile en hauteur.

8. Moyen d'usinage (10) servant à usiner et/ou à fabriquer une surface plane, en particulier un bord de segment (8) supérieur d'un segment de mât d'un mât en béton (102) pour préparer la construction d'un mât en béton, comprenant
- un outil d'usinage (40) servant à usiner ou à fabriquer la surface plane,
**caractérisé par**
- un dispositif porteur (32, 34), qui est fixé au niveau du côté supérieur d'un coffrage pour fabriquer le segment de mât, dans lequel le dispositif porteur (32, 34) présente un châssis porteur servant à porter l'outil d'usinage (40) et plusieurs moyens de déplacement servant à déplacer l'outil d'usinage (40) le long de la surface plane, dans lequel
- les moyens de déplacement sont préparés pour être déplacés le long de la surface plane et/ou pour être déplacés le long du dispositif porteur.

9. Moyen d'usinage (10) selon la revendication 8, **caractérisé en ce que** les moyens de déplacement sont préparés pour être déplacés le long d'une voie d'un cercle, dans lequel en particulier le châssis porteur surmonte le cercle, et/ou que le moyen d'usinage (10) est préparé pour que le châssis porteur tourne autour d'un axe de rotation, qui s'étend en particulier à travers le châssis porteur, et ainsi l'outil d'usinage (40) est guidé le long d'une voie circulaire pour usiner la surface plane dans la zone de ladite voie circulaire.

10. Moyen d'usinage (10) selon l'une quelconque des revendications 8 ou 9, **caractérisé en ce que** le châssis porteur peut être ajusté dans une longueur pour modifier ainsi une distance entre au moins deux des moyens de déplacement, en particulier pour créer ainsi une possibilité de déplacement le long de voies de cercles à taille différente.

11. Moyen d'usinage (10) selon l'une quelconque des revendications 8 à 10, comprenant un capteur de mesure adapté à une sonde de position (20), servant à guider l'outil d'usinage (40) le long de la surface plane à fabriquer ou à usiner, fixée par la sonde de position (20).

12. Procédé servant à usiner un bord de segment supérieur d'un segment de mât d'un mât en béton (102) pour préparer le segment de mât pour le placement d'au moins un autre segment de mât, **caractérisé par** les étapes
- de fixation d'un dispositif porteur au niveau du côté supérieur d'un coffrage pour fabriquer le segment de mât ;
- de déplacement d'un moyen d'usinage (10) disposé au niveau du dispositif porteur (32, 34) le long du bord de segment (8) pour usiner le bord de segment (8), dans lequel le moyen d'usinage (10) est guidé le long du dispositif porteur (32 ; 34) et ainsi le long du bord de segment (8) ;
- d'usinage du bord de segment (8) par le moyen d'usinage (10) pendant le déplacement du moyen d'usinage (10) le long du bord de segment (10).

13. Procédé selon la revendication 12,
**caractérisé en ce que** le moyen d'usinage (10) fonctionne de telle sorte avec le concours d'un moyen de mesure (20, 22) que l'usinage a lieu systématiquement à une même hauteur par rapport à la surface d'appui.

14. Procédé selon la revendication 12 ou 13,
**caractérisé en ce que** le moyen d'usinage (10) se déplace sur le dispositif porteur (32 ; 34), dans lequel le dispositif porteur (32 ; 34) est fixé en particulier au niveau d'un coffrage du segment de mât.

15. Procédé selon l'une quelconque des revendications 12 à 14,
**caractérisé en ce qu'**une tête d'usinage (46) du moyen d'usinage (10) est modifiée en hauteur pour respecter la hauteur d'un usinage souhaitée.

16. Procédé selon l'une quelconque des revendications 12 à 15,
**caractérisé en ce que** l'application d'une résine ou d'un ciment en tant que masse de compensation et/ou l'usinage plan du bord de segment (8), en particulier d'une masse de compensation appliquée sur le segment, sont compris.

17. Procédé selon l'une quelconque des revendications 12 à 16,
**caractérisé en ce qu'**un dispositif selon l'une quelconque des revendications 1 à 7 est utilisé, et/ou qu'un moyen d'usinage selon l'une quelconque des revendications 8 à 11 est utilisé.

18. Procédé selon l'une quelconque des revendications 12 à 17,
**caractérisé en ce que** l'étape d'usinage comprend l'application d'une résine ou d'un ciment durcissant rapidement, en particulier d'une résine ou d'un ciment à deux composants.

19. Coffrage (2) servant à fabriquer un segment de mât en tant que pièce préfabriquée en béton, comprenant un dispositif d'usinage selon l'une quelconque des revendications 1 à 8, dans lequel le dispositif porteur (32 ; 34) est fixé au niveau du coffrage.

20. Coffrage (2) selon la revendication 19,
**caractérisé en ce que** le coffrage (2) présente une partie de coffrage intérieure et une partie de coffrage extérieure (4, 6) et le dispositif porteur (32, 34) présente un système de rails (32, 34) avec un rail intérieur et/ou un rail extérieur (32, 34), et le rail intérieur (32) est fixé au niveau de la partie de coffrage intérieure (4) et le rail extérieur (34) est fixé au niveau de la partie de coffrage extérieure (6).
